# EUROPEAN PATENT SPECIFICATION

(11) **EP 4 434 333 B1**
(45) Date of publication and mention of the grant of the patent: **12.11.2025**
(21) Application number: 23163602.8
(22) Date of filing: 23.03.2023
(51) Int. Cl.: A01K 61/59, A01K 63/00, A01K 63/10

(54) **AQUACULTURE SYSTEM AND METHODS FOR CULTIVATING SHRIMP AND OTHER CRUSTACEANS**
AQUAKULTURSYSTEM UND VERFAHREN ZUR KULTIVIERUNG VON GARNELEN UND ANDEREN KRUSTENTIEREN
SYSTÈME D'AQUACULTURE ET PROCÉDÉS DE CULTURE DE CREVETTES ET D'AUTRES CRUSTACÉS

(43) Date of publication of application: 25.09.2024
(73) Proprietor: Klaipeda University, 92294 Klaipeda (LT)
(72) Inventor: Narvilas, Gintautas, Klaipeda (LT); Sprogys, Martynas, Klaipeda distr. (LT); Zolobaila, Jonas, Klaipeda distr. (LT)
(74) Representative: Klimaitiene, Otilija

(56) References cited:
- WO-A1-2018/103807
- CN-U- 214 482 845
- US-A1- 2008 236 505
- US-A1- 2016 113 251

## Description

### FIELD OF INVENTION

The invention relates to the cultivation of shrimp or other crustaceans in recirculating aquaculture systems. Specifically, this invention discloses a system and a method for cultivating these species in artificial conditions, providing a controlled growing process in an aquaculture tank, thereby reaching increased productivity and efficiency of aquaculture cultivation.

### BACKGROUND OF INVENTION

Traditional shrimp farming practices, means and use of natural resources can have negative impacts on the environment, including water pollution and the destruction of natural habitats. Therefore, artificial means for farming shrimps and other crustaceans are being designed and employed, to minimize the above negative impacts and reduce the environmental footprint of shrimp farming.

Indoor shrimp recirculating aquaculture system (RAS) farming is a known method of shrimp cultivation that involves growing shrimp in a closed, recirculating system within a controlled environment. This method of farming is gaining popularity due to its ability to overcome the limitations of traditional open-water systems, such as disease outbreaks, pollution, and unsustainable use of natural resources. The RAS system recirculates water, filters waste, and maintains optimal conditions for shrimp growth, resulting in higher yields and better-quality shrimp as a food product. Indoor shrimp RAS farming offers several advantages, including a higher level of control over the aquaculture cultivation environment, which allows for better monitoring of water quality and disease management. It also reduces the environmental impact of shrimp farming, as it uses a fraction only of the water required by the traditional open-water cultivation systems.

Indoor shrimp RAS farming is continually exploring new ways to cultivate shrimp more efficiently, while also addressing the challenge of limited land space, required for aquaculture cultivation. Inventions like multi-layer tanks allow for better space utilization, enabling farmers to maximize production capacity in limited spaces. These tanks are designed with multiple layers, providing an increased floor surface area for shrimp to live and grow. As the demand for sustainable and efficient shrimp production continues to rise, multi-layer shrimp tanks are becoming an increasingly attractive option for indoor RAS shrimp farming. Multi-layer shrimp tanks allow for high-density shrimp production in a relatively small area, making them a viable option for land-limited areas.

There are known prior art systems and methods, and patent documents (applications and granted patents) for cultivating aquacultures of shrimps and other crustaceans.

The international patent application WO2019180615A1 discloses aquaculture systems and methods for cultivating shrimp or other crustaceans: a method comprising: (a) providing a multilayer closed conduit aquaculture enclosure; (b) stocking said enclosure with shrimp; and (c) growing with standing biomass of at least 12.5 kg/m³ of enclosure volume. Additional systems and methods are also disclosed. Some disclosed systems are deployed submerged in water such as the ocean, a pond, a river, or an estuary.

The Korean patent application KR20200041179A relates to a double-layered shrimp farming apparatus, in which water is purified and recycled when cultivating shrimps, the temperature of the water is managed at a temperature required for farming the shrimps, and the oxygen content of the water is adjusted at a concentration required for farming the shrimps to cultivate a large number of shrimps in a narrow indoor space. According to this invention, the double-layered shrimp farming apparatus comprises: a water tank (100) having a water temperature adjustment means (110) installed therein to adjust the temperature of the water stored therein, having a purification means (120) removing foreign matters and odor, and an opening/closing lid (130) formed on an upper part; and two or more shrimp farming tanks (200) disposed on the upper part of the purification tank (100) and installed by double layers. In the shrimp farming tank (200), a water discharge means (210) is installed to suck the water of a lower part and discharge the sucked water to a bottom surface through an upper part to supply the water to the purification tank, a water temperature adjustment means (220) is installed to continuously maintain the water stored in the shrimp farming tank (200) at a target temperature, an oxygen supply means (230) is installed to supply oxygen to the water, and lighting means (L) is installed to adjust the brightness of the inside of the shrimp farming tank (200). Moreover, a water circulation means it is installed on a side surface to be connected to the purification tank. On the upper part of shrimp farming tank (200) and an opening/closing lid (270) is installed on the upper part.

The US patent US10709117B2 discloses an aquaculture system including stacked growth trays. Animals, such as shrimp, can be transferred between the growth trays for different stages of growth. Wastewater can be removed from the growth trays and can be processed by a water treatment system. Treated water can be returned to the growth trays. A valve in a first configuration can permit water to circulate through the growth tray while impeding the animals from exiting the growth tray. In a second configuration, the valve can permit the animals to exit the growth tray, such as to transition to a subsequent growth tray. A sweeper system can be used for cleaning and/or mixing the water in the growth tray, and/or for pushing the animals out of the growth tray during a transition.

The European patent EP3220736B1 describes a system for indoor shrimp aquaculture that comprises a plurality of stacked raceways, each raceway being a long, flat rectangular tank comprising at least two sections arranged in series and scaled to accommodate shrimp of increasing size. The sections are separated by a moveable section divider whereby shrimp may be transferred between sections once they reach a predetermined size by opening the moveable section divider and allowing the shrimp and water to flow through into the next section. Each raceway includes a waste collection assembly situated at the downstream end of each section for collecting waste for removal. Methods of using the system to grow shrimp are also provided. The raceways are further adapted to facilitate the operation of the production module at large scales, in this way; the system is scalable to achieve high-throughput production of shrimp.

The US patent application US20080236505A1 discloses various systems and apparatuses for raising aquatic animals in controlled environments in order to avoid disease and pollution, and for increasing the number of shrimp that can be raised in controlled environments. Particularly, US20080236505A1 generally relates to a shelving unit for raising aquatic animals in a controlled environment comprising a plurality of shelves having a top and bottom surface, wherein at least one surface is substantially solid to support the aquatic animals thereon and to allow feeding thereon by the aquatic animals. Also provided are systems comprising closed environments for containing water, at least one shelving unit, a feeding system for dispensing food onto the shelving unit, and a waste disposal system.

The above-discussed prior art patent documents are considered systems for cultivating shrimp and other crustaceans. The disclosed solutions are technically complicated to apply to large-scale shrimp farms. Due to the reservoirs' and tanks' structures, they can only be operated indoors, requiring big buildings. These systems are characterized by high energy consumption to maintain the optimal temperature for crustaceans being cultivated.

### SUMMARY OF INVENTION

**Technical problem.** The present invention is related to solving the aforementioned technical problem, by providing an efficient multi-layer (multi-floor) system and the corresponding methods for shrimp cultivation. The technical problem is related to several following aspects of implementing shrimp aquaculture cultivation systems:
1. Complex design. Rack systems are the most common designs. Due to the many structural elements and the tanks that make them up, the systems are heavy when filled with water, so it is important to ensure that the structure is strong enough to support the weight. The tanks must be made of high-quality materials, and a strong rack structure is needed to support the heavy weight. Due to the surfaces of the tanks being open and many pipelines connecting them, water leakage is a common problem in such open multi-layer shrimp tanks.
2. Temperature control. Controlling the temperature can be difficult in large multi-layer shrimp tanks. Shrimp requires a certain temperature range to grow optimally, and maintaining a constant temperature throughout the multi-layer tank requires a lot of energy, which is expensive.
3. Complex service (operation and maintenance). Maintenance of multi-layer shrimp tanks can be challenging, particularly in terms of cleaning and equipment checks. Harvesting shrimp from big-scale multi-layer tanks is also a difficult challenge.
4. Only indoor-operated tanks. Multi-layer tanks can be operated only inside a building, resulting in the need to build infrastructure. It is not possible to operate open multi-layer tanks in outdoor conditions, as optimal growth conditions will not be ensured.

**Solution.** The invention is defined in independent claims 1 and 14. Preferred embodiments of the invention are defined in the dependent claims. This solution is applicable also for cultivating other species of crustaceans. The proposed solution has the following important features
1. Cylinder-shaped tank construction with a multi-layer system. This invention discloses a tank construction for shrimp cultivation, comprising a multi-layer system. The tank is cylindrical. Circular tanks have several advantages over rectangular or square tanks in aquaculture, including circular tanks are more resistant to damage from external forces, such as wind or water currents, because they distribute the force evenly around the tank. In contrast, rectangular or square tanks may be more prone to damage at the corners or edges. Circular tanks have a more uniform water flow, which can help to distribute oxygen evenly throughout the tank. This can improve water quality and reduce the risk of stagnant areas or dead zones that can occur in rectangular or square tanks. Round tanks have the advantage of a naturally self-cleaning action. In addition, circular tanks are generally strong and durable and can withstand the weight of multiple layers of water and shrimp.

The horizontal layers divide the tank into several sections 101a-101f. The number of layers depends on the height of the tank. The layers are not interconnected mutually, this means, the shrimp (or other species) cannot migrate between the layers. In each layer, shrimp are grown as if in a separate tank.

The bottoms of the layers have a slope in the range of 0.5 to 5 degrees towards the center of the tank. The surface area of the bottoms depends on the diameter of the tank.

All materials of the tank's constructional elements, that have direct contact with salt water, are resistant to corrosion and made of corresponding corrosion-resistant materials.

The tank cannot function as a separate cultivation system; therefore, it is fully compatible with the RAS water filtration system.

2. The tank is completely closed. Therefore, less heat is lost due to energy dissipation to the environment and also due to the evaporation of the water. With the help of insulation, it helps to reduce heat loss.

3. Maintenance solutions. The tank can also be serviced internally if required. The upper layer of the tank is entered with the help of the hatch on the top. The bottoms of the layers (layer floors) are made of segments, and several segments of a layer are removable. These removable segments are arranged so that the service staff can get into the lower layers from the top hatch of the tank.

4. A descending bottom segment is used for efficient shrimp harvesting. For more effective shrimp harvesting, a shrimp collection ditch is used, which is integrated into one of the segments that make up the layer. During harvesting, the ditch opens (slopes towards the extraction hole) as a result of the lifting bag depleting air. Thanks to the collecting ditch, the shrimp are directed towards the harvesting hole, through which the shrimps are removed together with the water. The shrimps are swept into the collecting ditch with the help of a stronger water current.

5. Shape and external construction. The tank is cylindrical, and it may have an external insulation layer, and also, it is of a completely closed type.

6. Cultivation conditions for aquaculture. For shrimp and water quality monitoring the tank comprises:
- An underwater camera or several cameras, for example, one or more cameras in each layer;
- Lighting - every layer is illuminated. The lighting level is adjustable;
- Temperature, oxygen, pH, and water current speed sensors are integrated into the tower.

7. Installation site. The tank is built on a reinforced concrete foundation. Therefore, this tank is easily applicable for land-based aquaculture cultivation.

**Technical effects of the invention.** The tank provides a possibility of harvesting shrimp and other crustaceans species "layer by layer". A special design multi-layer tank can independently harvest shrimp from separate layers at any desired time and in any desired quantity. Further technical effects achievable by the present invention:
1. Multiple layers increase the cultivation surface area within the tank. This multi-layer tank may be adapted for commercial shrimp or another crustacean species farming. Higher productivity is achieved due to higher shrimp biomass produced. This is because shrimp density is highly dependent on the bottom surface area. This multi-layer tank can be designed to maximize space efficiency, with multiple layers stacked vertically. This allows for a high density of shrimp in a relatively small area, which is an important effect for commercial shrimp farming.
2. Fully enclosed type of tank saves energy for water heating. Heat is not lost through open surfaces, such as tank walls, an open top of the reservoir, and so on. Also, for the previously mentioned reasons, the water in the tank is not lost due to evaporation, which means that the tanks will require less energy to maintain a consistent temperature. This can result in significant energy savings over time.
3. Closed tank makes provides greater biosecurity than other open tanks. The closed-type tank improves biosecurity, disease-causing pathogens cannot enter the shrimp tank directly, and the incoming water is treated with ozone and UV lamps.
4. Flexible use of the tank. If necessary, there is a possibility to operate the tank in outside conditions, reducing the costs of needed infrastructure. The tank is also perfect for operation inside the building.
5. All shrimp farming processes are fully automated. Shrimp placing (seeding), shrimp monitoring, harvesting, and feeding are all automated operations (method steps), which reduces the need for manpower during shrimp farming. Automated feeding systems and monitoring equipment have made it easier to manage and maintain multi-layer shrimp tanks.
6. The cylinder-type tank is easy to scale up. No major structural changes are required when increasing the size of the tank.

### DESCRIPTION OF DRAWINGS

The drawings are provided as a reference to possible embodiments and are not intended and should not limit the scope of the invention.
- **Fig. 1**: depicts the tank according to the present invention, comprising a tower and multi-layer system for aquaculture farming: 100 - the tank; 101a-f - separate closed layers; 102 - insulation material layer, the tank is insulated with; 103 - a reinforced concrete foundation, onto which the tank is built; 104 - service hatch; 105 - cleaning brush; 106 - electric motor and reduction gear which spins the cleaning brush; 107a-f - bottoms of the layers; 108 - breathing valve; 109 - feed injection sub-system.
- **Fig. 2a**: depicts the multi-layer tank provided by the present invention, which includes six vertical layers and individual water inlets 202a-f; the multi-layer tank further comprises a large wastewater outlet 201 positioned at the center, featuring perforated metal sheets or nets integrated within 202. The direction 203 of the water flow is indicated in the figure, with water entering into the tank through the water inlets and exiting via the wastewater common outlet;
- **Fig. 2b**: depicts the circulation pattern of one of the separate closed layers: this is a common feature of all layers;
- **Fig. 3a**: depicts the main view of the positioning of the communication vessels within the tank: the system comprises multiple communication vessels arranged vertically and separated by columns (301a-g), with each vessel and column having its outlet; the vessels are connected via a common pipe 302, which in turn connects to the common wastewater outlet (main outlet) 201.
- **Fig. 3b**: depicts the barriers in the communication vessels: 310a-e is for level control of the individual separated closed layers, 311 - is dedicated to determining the upper water level in the tank;
- **Fig. 3c**: depicts a top view of the integration design of communication vessels within a multi-layer shrimp tank construction: 320a-f - outlets for water level control in the layers, 201 - the main outlet;

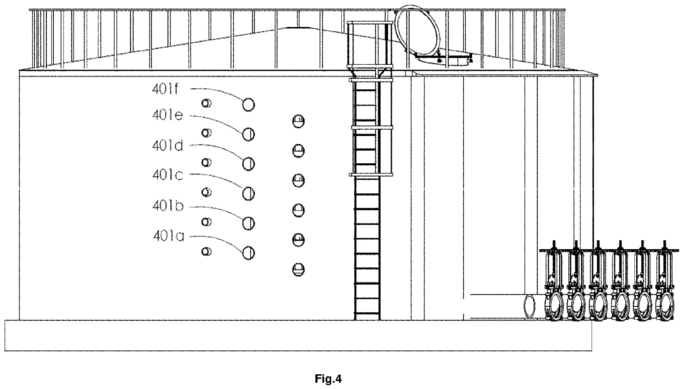

- **Fig. 4**: depicts the side view of the multi-layer tank; in all separated and closed layers, in each one, there is integrated an individual inlet valve (401a-f), for the introduction ("seeding") of the shrimps or other crustaceans into the tank, for the cultivation process;
- **Fig. 5a**: depicts the side view of the multi-layer tank; on all separated and closed layers, in each one, there is integrated an individual outlet (501a-f) for harvesting the shrimps or other crustaceans out of the tank;
- **Fig. 5b**: depicts one of the bottoms of the layers in a multi-layer tank system comprising removable segments 510. One of these segments 511 is variable (movable) and positioned in front of the harvesting outlet. This variable segment can change its angle to create a ditch, which directs the shrimp toward the outlet hole during the harvesting process. The ability to move (lift) the variable segment is empowered by an airbag 512;
- **Fig. 6**: illustrates the feed injection system comprising the following components: 601 - control system (CPU), 602 - feed storage, 603 - feeder unit, 604 - mixing tank, 605 - diaphragm (dosing) pump, 606 - non-return valve, 607 - actuators (motor-controlled valves), 608 - sensors, 609 - power supply, and 610 - communication system;
- **Fig. 7**: a simplified flow chart of the operation of a feed injection system according to the present invention;

### DETAILED DESCRIPTION OF THE INVENTION

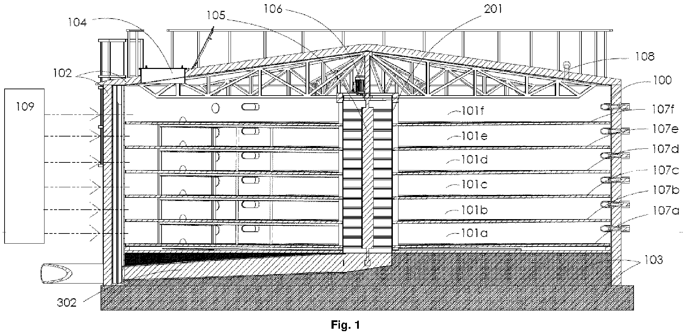

**Construction of the multi-layer tank.** The horizontal layers divide the tank into several sections, presented in Figure 1.

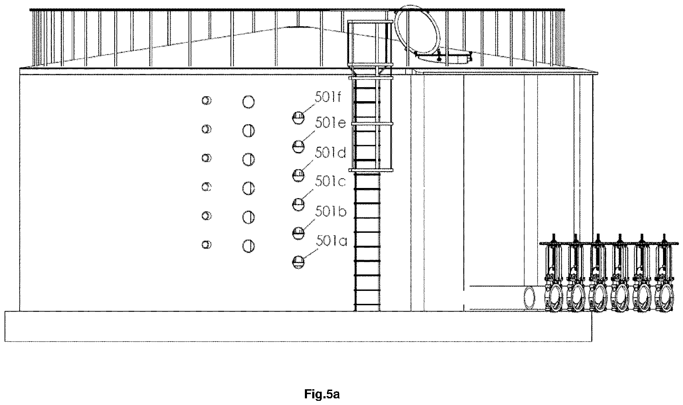

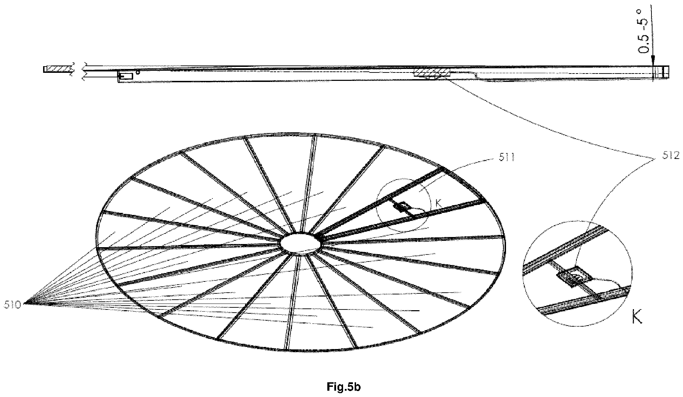

The number of layers depends on the height of the tank. The minimum distance between layers is 20 cm, and the maximum distance between layers is 150 cm. The bottoms of the layers (107a-107f) have a slope of 0.5-5 degrees towards the center Fig.5b. The tank diameter can range from 2-30 meters.

The layers are not interconnected, the shrimp cannot migrate between the layers. In each layer, the shrimp are grown in a separate tank.

The bottoms of the layers (107a-107f) are stationary, nevertheless, technically it is possible to remove several bottom segments, for tank maintenance 510. The surface area of the bottoms of the layers (107a-107f) depends on the diameter of the tank.

The tank has a cylindrical shape, and the bottoms of the layers (107a-107f) are round (circular). All materials that have direct contact with saltwater are resistant to corrosion.

The tank is completely closed, so less heat and water are lost because of the evaporation of the water.

An underwater camera (or several cameras) may be implemented and used to monitor the shrimp in the tower (multi-layered tank).

The tank may also have lighting (illumination). Every layer is illuminated. The lighting level is adjustable. Lighting is used for shrimp welfare and shrimp monitoring. Lighting plays a crucial role in shrimp cultivation, as it can affect the growth and behavior of the shrimp. Shrimp need a consistent photoperiod of light and darkness to thrive. This is why the tank has underwater lighting installed.

The temperature, oxygen, and pH sensors are integrated into the tank for water quality monitoring. Maintaining water quality is critical in shrimp cultivation. It is important to maintain appropriate levels of pH, temperature, and dissolved oxygen. Regular water testing and monitoring are essential to ensure that the water conditions remain optimal for shrimp cultivation and growth.

The tank is insulated with insulation materials layer 102. Insulation helps to reduce heat loss, which means that the tanks will require less energy to maintain a consistent temperature. This can result in significant energy savings over time. If necessary, there is a possibility to operate the tank in outdoor conditions, reducing the costs of needed building infrastructure.

The cover tightly covers the top of the tank. The lid is cone-shaped. For maintenance purposes, hatch 104 on the top of the tank is arranged. The upper layer of the tank can be accessed through hatch 104. Since several segments of the bottoms of the upper layers can be removed (for maintenance purposes), therefore, it is possible to get from the upper layer into the one below the layer, and in such a way as to reach also the lowest layer of the tank. The dismounting of some segments of layers' bottoms is foreseen, for the service staff to be able to maintain the required lower layers of the tank, if necessary. As an example, tank layers may need to be serviced (cleaned, checked) after harvesting the shrimp out of the tank.

Regular maintenance, cleaning, and periodic equipment checks are necessary operations, to ensure the long-term cultivation success with the multi-layer shrimp cultivation tank.

The breather valve on the top of the tank is designed to allow air to freely enter and escape from the closed system. It also serves for the prevention of overpressure and vacuum formation within the tank volume.

The tank is not a standalone device and it cannot function as a separate cultivation system; therefore, it is arranged as fully compatible with the RAS water filtration system.

Materials, commonly used for circular tank construction, may be selected from fiberglass, polyethylene, polypropylene, and steel. Each material has its strengths and weaknesses in terms of cost, durability, and resistance to corrosion and other environmental factors.

Circular tanks may be supported by a variety of systems, including concrete foundations. For example, in one embodiment, the tank is built on a reinforced concrete foundation 103.

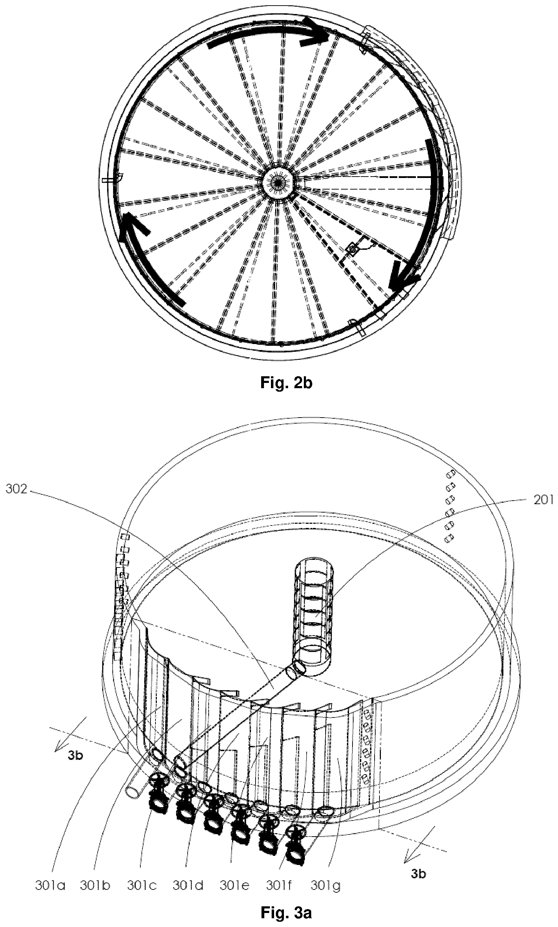

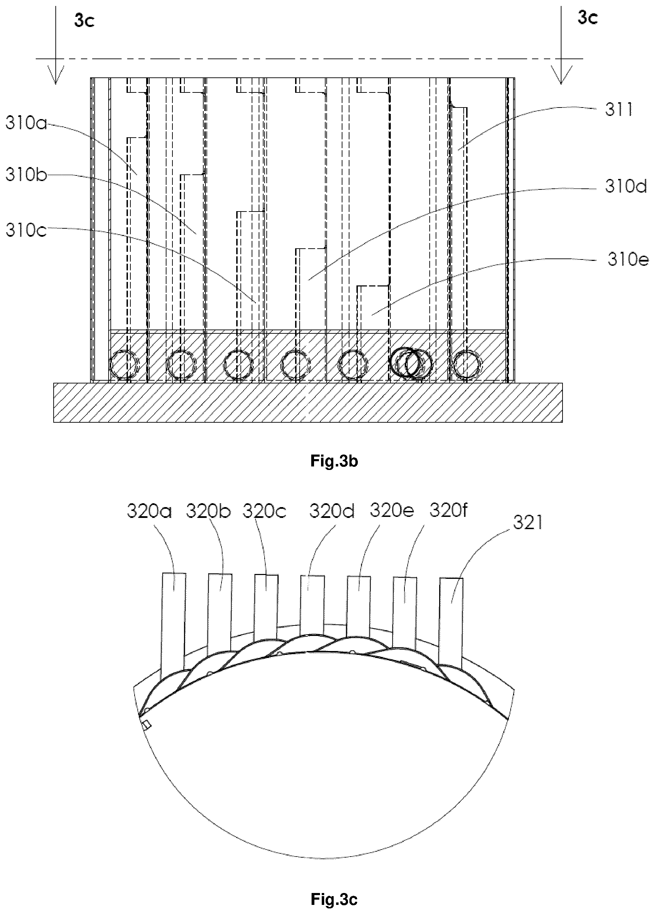

**Placement of shrimp for cultivation and harvesting to/from the shrimp tank.** The methods using the above-described tank comprise the following steps, such as shrimp stocking and harvesting:
1. Shrimp juveniles are pumped into the multi-layer tank together with water from the rearing system;
2. The shrimp stocking process starts from the bottom layer of the tank. First, the layer is filled with water, then the shrimp are transferred. The same procedure is performed up to the top layer until the tank is filled;
3. Shrimp enter the tank through an opening valve specially designed for this procedure 401a - 401f. Standard valves or any other permanent or temporary solutions can be used;
4. Harvesting shrimp after cultivation is the opposite of placing shrimp for cultivation. First, the water in the upper layer of the shrimp tank is drained, then the remaining water flows with the shrimp through the harvesting hole, which is shown in drawing 501a - 501f. Standard valves or any other permanent or temporary solutions can be used;
5. For more effective shrimp removal, a shrimp collection ditch is used, which is integrated into one of the segments that form layer 511;
6. During harvesting, the ditch opens (slopes towards the extraction hole) as a result of the lifting bag 512 depleting air, and thanks to the collecting ditch, the shrimps are directed towards the harvesting hole 501a - 501f, through which the shrimps are removed together with the water;
7. The shrimps are swept into the collecting ditch with the help of a stronger water current;
8. The shrimp harvest is dewatered after the harvesting procedure;
9. The tank provides a possibility of harvesting shrimp "layer by layer". A special design multi-layer tank can independently harvest shrimp from separate layers at any desired time and in any desired quantity. Due to the specific structure of communicating vessels Fig. 3a, different water levels in the tank can be maintained. Example: After harvesting shrimp from the upper layer, a lower water level in the tank can be maintained, since shrimp are no longer grown in this layer, in which case the tank is operated with a lower water volume.

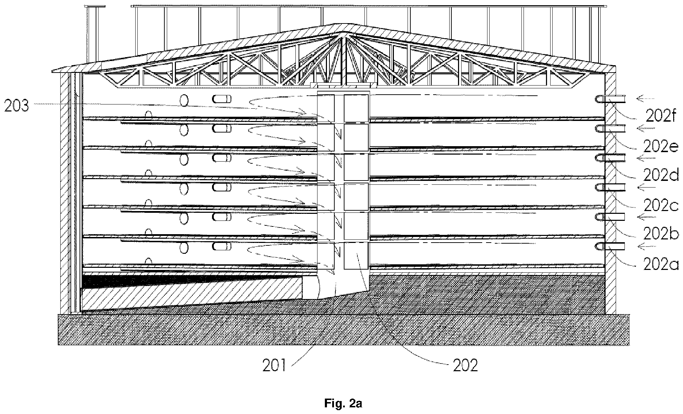

**Provision of water hydrodynamics in the multi-layered tank.** The solution of ensuring water hydrodynamic in the tank is described by the following elements and operational features:
1. Water from the RAS filtration system comes to the tank, then the water is distributed with the help of a collector and directed to separate layers of the pool. The tank is compatible with typical RAS systems, so standard RAS water filtration systems are suitable. The amount of water inlets depends on the diameter of the tank. A tank with a diameter of 10 meters uses 3 water inlets per layer. In smaller diameter tanks, 2 or 1 inlet per layer is sufficient.
2. The diameter (size) of the inlets depends on the diameter of the tank, the water in a certain layer changes from 1 to 2 times per hour. Water enters the tank through an inlet that directs the water inside the tank at an angle of fewer than 90 degrees.
3. To create a vortex flow pattern, where water flows in a circular pattern around the center of the tank inlets placed around the perimeter of the tank, depicted in Fig. 2a, Fig. 2b.
4. The amount of water supply (flow rate) is regulated separately in each layer inlet. Water flow speed sensors and inlet valves are used to adjust the water flow.
5. Water exchange in individual layers occurs individually, there is no general water exchange in the tank.
6. Each layer functions individually. Individual water exchange and removal of suspended particles take place in each layer.
7. Since the tank is circular (cylindrical shape), the suspended particles will move towards the center and leave the tank through the outlet. Circular tanks have a more uniform water flow, which can help to distribute oxygen evenly throughout the tank. This can improve water quality and reduce the risk of stagnant areas or dead zones that can occur in rectangular or square tanks. Round tanks have the advantage of a naturally self-cleaning action. The diameter of the central outlet also depends on the diameter of the tank. The outlet is made of perforated material or net 202. The perforation eye diameter is in the range of 1-3 mm. A cleaning brush 105 is integrated inside the wastewater outlet. The brush performs a preventive function so that the central outlet does not get blocked. The brush works by periodically removing deposits from the outlet wall.
8. The multi-layer tank has communicating vessels, but they are slightly more complicated to have the feature of water level control (in the present case - 6 levels) as presented in Fig. 3a.

Covered the tank with insulation for the possibility of building-less shrimp cultivation. Communicating vessels are integrated into the tank construction using the same material, to simplify the design and decrease heat loss, because the higher the number of pipes, the greater the area between water and air, which leads to the biggest heat loss.

Inside the communicating vessels, there are integrated barriers that control the water levels inside tanks 310a - 310e, 311. This non-traditional communicating vessel is physically the same: the principle is based on the idea that a liquid will seek its level, and will flow from an area of higher pressure to an area of lower pressure to achieve equilibrium.

The water level in a tank can be controlled by adjusting the flow of liquid through automatic or manual valves in outlets 320a-320f. The main outlet 201 in a communicating vessel is typically responsible for determining the upper water level in the tank and preventing overflow. This outlet is typically left open during normal operation and does not typically include a valve for controlling the flow of liquid.

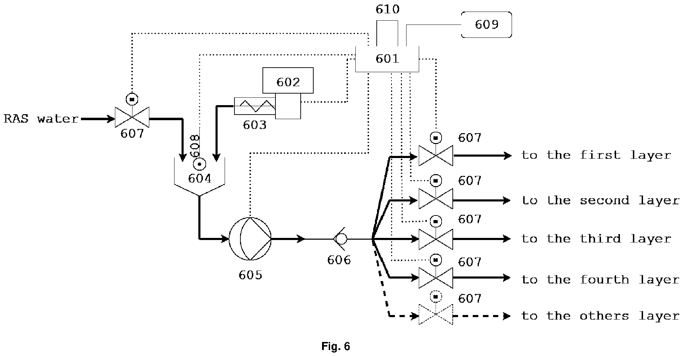

**Feeding (food injection) system (109) and operation.** To provide shrimp feed to a closed water volume (inside the multi-layer tank), there is a designed feed injection system based on the use of a non-return valve system Fig. 6. This system allows precise delivery of the feed to the shrimp while preventing the backflow of water into the food supply.

The fully automated aquaculture feed injection system (109) comprises several components which, working together, ensure that the right amount of feed is being delivered to the shrimp aquaculture at the right time. The feed injection system is presented in Figure 6 and it comprises:
1. Feed storage 602. A container or hopper that holds the feed and keeps it dry and fresh.
2. Feeder unit 603. The main component of the feeder system that delivers the feed into the mixing tank. This feeder unit can include a dispenser, spiral screw feeder, belt feeder, or other types of feeders.
3. Mixing tank 604. The container where the water and the food are mixed before being dispensed to the shrimp aquaculture. It typically has an inlet for RAS (recirculation aquaculture system) water and an inlet for feed, as well as an outlet for the mixed solution. The tank may include agitators or mixing blades to help achieve this mixture. Also, to ensure that dry shrimp feed is evenly distributed with the water (the carrier) before it is delivered to the shrimp. It helps to prevent forming clumps of dry feed, which block the pipes or the dosing pump.
4. Control system (CPU) 601 - this system manages (controls) the feeding schedule and the amount of feed being dispensed. The system comprises a computer, a control panel, or a programmable logic controller (PLC).
5. Diaphragm (dosing) pump 605. To ensure that feed is delivered to the shrimp, the pump performs mechanical work.
6. Non-return valve 606 is implemented, to prevent backflow.
7. Actuators (motor-controlled valves) 607 are intended to control the flow of feed into the multi-layer tank. These valves are connected to a motor that can open or close the valve as needed, allowing the system to precisely control the amount of feed that is dispensed. The motor-controlled valves can be managed by a central processing unit (CPU) 601 which can monitor and adjust the feeding process as necessary. The valves also help to prevent the backflow of water into the feed supply too. Motor-controlled valves often include mechanical reduction gear, which helps to provide a greater torque force for opening and closing the valve. This allows the valve to open and close with greater force, making it less likely to become blocked by small food particles.
8. Sensors. A variety of sensors such as food level, water level 608, etc. give real-time information to the control system to adjust feeder settings accordingly.
9. Power supply 609: a source of electric power.
10. A communication system 610 allows the feeder to be monitored and controlled remotely. It can include a wired or wireless communication system.

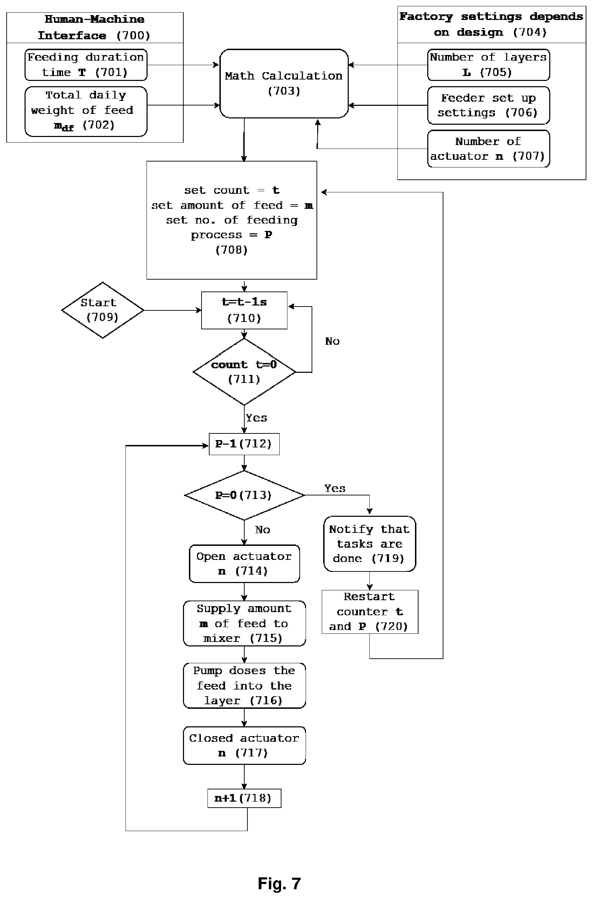

**Actuators.** The number of actuators depends on the number of layers. All these actuators act as multi-way valves that can direct feed in multiple directions (up, down) or to multiple destinations (different tank layers). All these actuators are managed by a control system (CPU) 601 which follows the algorithm Fig. 7 that was pre-programmed before. To ensure precise feed distribution throughout a multi-layer tank, each actuator is opened one by one with the condition that only one actuator is open at a time.

**Algorithms.** The feed injection system algorithm Fig. 7 automatically calculates how much feed consists in one portion (shot) following the preset parameters:
- feeding duration,
- total daily weight of feed 708.

In the algorithm, the mathematical calculation block 703 takes input from two sets of parameters: the human-machine interface 700 and the factory settings 704. The human-machine interface parameters consist of feeding duration time T 701 and total daily weight of feed mdf 702. These parameters are set by the user, such as an operator or worker, and provide information about how much and how often the shrimps or other crustaceans should be fed in separate layers. The factory settings parameters consist of the number of layers L 705, feeder setup settings 706, and the number of actuators in 707 parameters. These parameters are set up by the manufacturer or installer of the feeding system and provide information about the specific hardware and software configuration of the system.

Using these input parameters, the algorithm performs a mathematical calculation to produce three output parameters: to set the counter t, the amount of feed, and the number of feeding process parameters 708. The set counter t parameter refers to the time (duration) between feeding sessions that will occur based on the input parameters. The set amount of feed parameter refers to the total amount of feed per shot that will be dispensed during each feeding session. The set number of feeding process parameters refers to the number of feeding sessions that will occur based on the layers.

The algorithm operates in a standby mode until the operator initiates the process by pressing the "start" button 709. After every iteration of the "start" button is pressed, the algorithm initializes the countdown process by setting up a countdown loop that continuously compares the set count value with 0 every second. The countdown loop consists of two distinct steps:
- block 710, responsible for decrementing the value by 1 at intervals of one second, and
- block 711, which is tasked with comparing the values.

The countdown loop ensures that the feeding process starts at the correct time and that the set count value is accurately reflected throughout the process. The algorithm may also incorporate feedback and monitoring systems that provide real-time data about the feeding process.

Upon satisfaction of the condition stipulated by block 711, the algorithm transitions forward to the main loop. At the outset of the main loop, a preconditioning step identical to that of the initial loop exists. Its function is to guarantee that the feed is provided to all layers, without exceeding the intended scope. This precondition step consists of two distinct steps: block 712, which decrements the value by 1 at intervals of one feeding session, and block 713, which is responsible for comparing the values. The algorithm iteratively executes all requisite processes beneath block 713 until the condition specified therein is not satisfied. After block 713, all ensuing steps are accountable for the actual physical feeding process within the injection feeder. Said process is realized using executing actuator open/closed operations 714, and 717, as well as feeder 715 and pump dosing 716 operations.

After block 713's conditions have been satisfied, a notification 719 is sent to the user indicating the successful completion of the task. Following this, the algorithm carries out a counter t reset and reconfigures the feeding process P values. The countdown process is then re-initiated, which will continue until the commencement of the next feeding session.

## Claims

1. A system for cultivating aquaculture of shrimp or other crustaceans, comprising
• a ground basement (103), such as a reinforced-concrete foundation,
• a closed cylinder-shaped tank (100) placed on said ground basement (103), the tank (100) comprising two or more horizontal cylinder-shaped layers (101) for cultivating the crustaceans separately on the areas of each layer (101),
• a central waste water outlet (201) leading through a common outlet to a recirculation aquaculture system RAS, said central outlet (201) has perforated walls (202) from each layer (101), allowing cultivation waste expulsion from the layers (101) to the common outlet and the RAS;
• the recirculation aquaculture system for supplying the filtered and conditioned water into individually controlled inlets (202a-f) of each layer (101), by injecting with less than 90 degrees angle to the cylinder-shaped wall of the tank, circulating the water in the cylinder-shaped layer (101) before draining it out;
• means of injecting a food by feeding valves (607) and inlets individually into the multiple layers (101a-f), as a suspension of water with the food,
**characterized in that** the tank further comprises
• tubes with inlet valves (401a-f) from a shrimp juveniles rearing sub-system, those arranged individually into each of the multiple layers (101a-f),
• shrimp harvesting outlets (501a-501f) together with layers' bottom ditch (511) arrangements for shrimp collection, arranged individually at each of the multiple layers (101a-f), and
• means of supporting water level at each of the multiple layers (101a-f) of the cylinder-shaped tank, those connecting tank layers (101a-f) individually with corresponding external communicating vessels (310a-f) comprising outlets and valves (320a-f), said communicating vessels arranged to control water level in the tank (100) at level of a selected particular layer (101a-f).

2. The system according to claim 1, wherein the bottoms (107a-107f) of the tank horizontal layers (101a-101f) have slopes to the central waste water outlet (201), wherein the slopes are in the range from 0,5 to 5 degrees.

3. The system according to any claim 1 to 2, wherein a number of horizontal layers (101a-101f) in the tank (100) is from 2 to 10, and preferably 6.

4. The system according to any claims 1 to 3, wherein the minimum vertical distance between the bottoms (107a-107f) of the tank layers (101a-101f) is 20 cm and the maximum vertical distance between the bottoms (107a-107f) of the tank layers (101a-101f) is 150 cm.

5. The system according to any claim from 1 to 4, wherein the tank (100) diameter is in the range from 2 to 30 meters.

6. The system according to any claim from 1 to 5, wherein the communicating vessels (310a-f) for supporting water level at a selected particular layer (101a-101f) are integrated into the tank construction, thereby reducing the number of external pipes, and made of same materials as the tank (100) wall, and arranged to retain the cylindric shape of the tank (1).

7. The system according to any claim from 1 to 6, wherein each layer (101a-f) comprises its bottom (107a-107f) partitions forming up the bottom (107a-107f) of that layer, wherein some partitions are stationary, and some other partitions are removable (510) thereby allowing to remove partitions for the tank (100) maintenance.

8. The system according to any claim from 1 to 7, wherein each layer (107a-107f) bottom (107a-107f) comprises a controllable harvesting partition (511, 512) integrated as a movable segment (510) in the layer's bottom, wherein a harvesting ditch is formed with a slope towards the harvesting outlet (501a-f) of that layer (107a-107f), during the harvesting of the grown aquaculture of shrimps with the water through the harvesting outlet (501a-f).

9. The system according to any claim from 1 to 8, wherein the central waste water outlet (201) comprises its cleaning means (105), preferably, a vertical screw-shaped rotating brush (105), for cleaning the wastewater drainage perforations (202) of each layer (101) and pushing the water with cultivation waste through the common outlet (201) to the RAS.

10. The system according to any claim from 1 to 9, wherein the tank (100) is covered with a thermally insulating material (102) to reduce heat loss, and for cultivating the crustaceans in outdoor conditions.

11. The system according to any claim from 1 to 10, comprising a breather valve (108) on the top of the tank (100), allowing air to freely enter and escape from the closed system, thus preventing the formation of overpressure or vacuum.

12. The system according to any claim from 1 to 11, further comprises any one of
• underwater cameras, to monitor the tank (100), the layers (101), and the crustaceans cultivated within;
• lighting means with the lighting level adjustable, for illuminating every layer;
• temperature, oxygen, pH, and water current speed sensors integrated into the tank (100), to monitor aquaculture cultivation conditions,

13. The system according to any claim from 1 to 12, wherein the means of feeding the aquaculture is a sub-system arranged to inject food as a water-based food suspension obtained by mixing dry food with water from the RAS system, and injection of said suspension is controllable into each of the tank layers (101a-f) by motor-controlled valve actuators (607a-f), said feeding sub-system comprising
• a feed storage container or hopper (602) holding dry feed;
• a feeder unit (603), such as a dispenser, spiral screw feeder, belt feeder, or other types of feeders, for delivering the feed into the mixing tank;
• a mixing tank (604), for mixing the dry food with water from an inlet of RAS inlet;
• a dosing pump (605), mechanically delivering the mixed liquid feed to the layers (101a-101f) of the tank (100);
• a non-return valve (606), to prevent backflow of the feed flow, and
• motor-controlled valve actuators (607) to control the individual feed flows into the layer of the tank (100),
• any of the sensors for measuring food level and/or water level (608),
• a control system (601) and/or a communication system (610),
wherein said feeding sub-system is configured to
• mix the dry food with the water from the RAS in the mixer, thereby providing liquid food flow,
• dispense the liquid food flow individually to the layers (101a-101f) of the tank (100) through the food inlets, thereby controlling the feeding duration and total daily weight of feed being dispensed.

14. A method of aquaculture cultivating in the system according to claims 1 to 13, comprising steps of
**a)** loading shrimp juveniles individually into the tank (100) layers (101a-f) with water from a rearing system, through a rearing tube and inlet valves (401a-f), wherein the loading process starts from the bottom layer (101a) of the tank (100), wherein
• the bottom layer (101a) is filled with water, then the juveniles are loaded in, and further
• the same step is repeated, up to the top layer (101f) of the tank (100),
**b)** cultivating the loaded shrimp aquaculture during its growth period, providing necessary cultivation conditions for growth, wherein the food is injected controllably to each of the tank layers (101a - 100f) as a liquid suspension of water with a dry food,
**c)** harvesting the grown aquaculture after the cultivation, wherein
• harvesting from the multiple layers (101a - 101f) in a reverse order from the top-layer (101f) to the bottom-layer (101a), wherein
o the water in any upper layer is drained, and the layer's harvesting outlet (501a-501f) is opened
o the remaining water with the shrimps is directed through the layer's harvesting outlet (501a-501f), wherein
o the shrimp collection ditch (511) is with a slope towards the harvesting outlet (501 a-501f), and shrimps are swept out through the layer's collecting ditch and the harvesting outlet (501a-501f) with a stronger water current,
• After the harvesting, the collected harvest of shrimp is dewatered.

15. The method according to claim 14, wherein during the shrimp aquaculture cultivation step **(b),** the food for the aquaculture is provided by steps of
• mixing the dry food with the water from the RAS, thereby providing a liquid food suspension,
• pushing the liquid food suspension to flow to individual feeding inlets of each layer (101 a-f),
• dispensing the liquid food suspension flow individually to the layers (101a-f) of the tank (100) through the controlled food inlets, and at the same time preventing the food suspension flow back using the non-return valve (606), and
• controlling the feeding duration and total daily weight of feed (708) being dispensed.

## Patentansprüche

1. System zum Kultivieren einer Aquakultur von Garnelen und anderen Krustentieren, umfassend
• ein Grundgeschoss (103), wie etwa ein Fundament aus bewehrtem Beton,
• einen geschlossenen zylinderförmigen Tank (100), der auf dem Grundgeschoss (103) platziert ist, wobei der Tank (100) zwei oder mehrere horizontale zylinderförmige Schichten (101) zum separaten Kultivieren der Krustentiere auf den Bereichen jeder Schicht (101) umfasst,
• einen zentralen Abfallwasserauslass (201), der durch einen gemeinsamen Auslass hindurch zu einem Rückführungsaquakultursystem, RAS, führt, wobei der zentrale Auslass (201) gelochte Wände (202) aus jeder Schicht (101) aufweist, die einen Kultivierungsabfallausstoß aus den Schichten (101) zu dem gemeinsamen Auslass und dem RAS ermöglichen;
• das Rückführungsaquakultursystem zum Versorgen des gefilterten und konditionierten Wassers in einzeln gesteuerte Einlässe (202a-f) jeder Schicht (101) hinein durch Einspritzen in einem kleineren Winkel als 90 Grad zu der zylinderförmigen Wand des Tanks und Rückführen des Wassers in die zylinderförmige Schicht (101) vor Drainieren desselben nach außen;
• Mittel zum einzelnen Einspritzen eines Futters durch Fütterungsventile (607) und Einlässe in die mehreren Schichten (101a-f) hinein als eine Suspension von Wasser mit dem Futter,
**dadurch gekennzeichnet, dass** der Tank ferner Folgendes umfasst:
• Röhren mit Einlassventilen (401a-f) aus einem Garnelenjungtierzuchtteilsystem, wobei diese einzeln in jede der mehreren Schichten (101a-f) hinein angeordnet sind,
• Garnelenernteauslässe (501a-501f) zusammen mit Anordnungen von Schichtenbodengräben (511) zur Garneleneinsammlung, die einzeln an jeder der mehreren Schichten (101a-f) angeordnet sind, und
• Mittel zum Aufrechterhalten eines Wasserpegels an jeder der mehreren Schichten (101a-f) des zylinderförmigen Tanks, wobei diese Tankschichten (101a-f) einzeln mit entsprechenden externen kommunizierenden Gefäßen (310a-f), umfassend Auslässe und Ventile (320a-f), verbinden, wobei die kommunizierenden Gefäße dazu angeordnet sind, den Wasserpegel in dem Tank (100) auf den Pegel einer ausgewählten konkreten Schicht (101a-f) zu steuern.

2. System nach Anspruch 1, wobei die Böden (107a-107f) der horizontalen Schichten (101a-101f) des Tanks Gefälle zu dem zentralen Abfallwasserauslass (201) aufweisen, wobei die Gefälle im Bereich von 0,5 bis 5 Grad liegen.

3. System nach einem der Ansprüche 1 bis 2, wobei eine Anzahl an horizontalen Schichten (101a-101f) in dem Tank (100) von 2 bis 10 und bevorzugt 6 beträgt.

4. System nach einem der Ansprüche 1 bis 3, wobei der minimale vertikale Abstand zwischen den Böden (107a-107f) der Tankschichten (101a-101f) 20 cm beträgt und der maximale vertikale Abstand zwischen den Böden (107a-107f) der Tankschichten (101a-101f) 150 cm beträgt.

5. System nach einem der Ansprüche 1 bis 4, wobei der Durchmesser des Tanks (100) im Bereich von 2 bis 30 Meter liegt.

6. System nach einem der Ansprüche 1 bis 5, wobei die kommunizierenden Gefäße (310a-f) zum Aufrechterhalten des Wasserpegels an einer ausgewählten konkreten Schicht (101a-101f) in die Tankkonstruktion hinein integriert sind, dadurch die Anzahl an externen Rohren verringern und aus gleichen Materialien wie die Wand des Tanks (100) hergestellt sind und dazu angeordnet sind, die Zylinderform des Tanks (1) beizubehalten.

7. System nach einem der Ansprüche 1 bis 6, wobei jede Schicht (101a-f) ihre Bodenabteile (107a-107f) umfasst, die den Boden (107a-107f) dieser Schicht bilden, wobei einige Abteile stationär sind und einige Abteile entfernbar (510) sind und dadurch ermöglichen, dass Abteile zur Wartung des Tanks (100) entfernt werden.

8. System nach einem der Ansprüche 1 bis 7, wobei der Boden (107a-107f) jeder Schicht (107a-107f) einen steuerbaren Ernteabteil (511, 512) umfasst, der als ein bewegliches Segment (510) in dem Boden der Schicht integriert ist, wobei während des Erntens der gewachsenen Aquakultur von Garnelen mit dem Wasser durch den Ernteauslass (501a-f) hindurch ein Erntegraben mit einem Gefälle in Richtung des Ernteauslasses (501a-f) dieser Schicht (107a-107f) gebildet ist.

9. System nach einem der Ansprüche 1 bis 8, wobei der zentrale Abfallwasserauslass (201) seine Reinigungsmittel (105), bevorzugt eine vertikale schraubenförmige Drehbürste (105) zum Reinigen der Abfallwasserdrainagelochungen (202) jeder Schicht (101) und Drücken des Wassers mit Kultivierungsabfall durch den gemeinsamen Auslass (201) hindurch zu dem RAS, umfasst.

10. System nach einem der Ansprüche 1 bis 9, wobei der Tank (100) mit einem wärmeisolierenden Material (102), um Wärmeverlust zu verringern und zum Kultivieren der Krustentiere unter Außenbedingungen, bedeckt ist.

11. System nach einem der Ansprüche 1 bis 10, umfassend ein Entlüftungsventil (108) oben auf dem Tank (100), das es Luft ermöglicht, frei in das geschlossene System einzutreten und daraus zu entweichen, und somit der Bildung eines Überdrucks oder eines Vakuums vorbeugt.

12. System nach einem der Ansprüche 1 bis 11, ferner umfassend eines von Folgendem:
• Unterwasserkameras, um den Tank (100), die Schichten (101) und die im Innern kultivierten Krustentiere zu überwachen;
• Beleuchtungsmitteln mit anpassbarem Beleuchtungspegel zum Erhellen jeder Schicht;
• Temperatur-, Sauerstoff-, pH- und Wasserströmungsgeschwindigkeitssensoren, die in dem Tank (100) integriert sind, um Aquakulturkultivierungsbedingungen zu überwachen.

13. System nach einem der Ansprüche 1 bis 12, wobei die Mittel zum Füttern der Aquakultur ein Teilsystem sind, das dazu angeordnet ist, Futter als eine wasserbasierte Futtersuspension einzuspritzen, die durch Mischen trockenen Futters mit Wasser aus dem RAS-System erlangt wird, und die Einspritzung der Suspension in jede der Tankschichten (101a-f) hinein durch motorgesteuerte Ventilaktoren (607a-f) steuerbar ist, wobei das Fütterungsteilsystem Folgendes umfasst:
• einen Futterspeicherbehälter oder -trichter (602), der trockenes Futter enthält;
• eine Fütterungseinheit (603), wie etwa einen Spender, eine Schneckenfütterungsanlage, eine Bandfütterungsanlage oder andere Arten von Fütterungsanlagen zum Liefern des Futters in den Mischtank hinein;
• einen Mischtank (604) zum Mischen des trockenen Futters mit Wasser aus einem Einlass des RAS-Einlasses;
• eine Dosierpumpe (605), die das gemischte Flüssigfutter mechanisch an die Schichten (101a-101f) des Tanks (100) liefert;
• ein Rückschlagventil (606), um einem Rückfluss des Futterflusses vorzubeugen, und
• motorgesteuerte Ventilaktoren (607), um die einzelnen Futterflüsse in die Schicht des Tanks (100) hinein zu steuern,
• einen beliebigen der Sensoren zum Messen eines Futterpegels und/oder des Wasserpegels (608),
• ein Steuersystem (601) und/oder ein Kommunikationssystem (610), wobei das Fütterungsteilsystem zu Folgendem konfiguriert ist:
• Mischen des trockenen Futters mit dem Wasser aus dem RAS in dem Mischer und dadurch Bereitstellen eines Flüssigfutterflusses,
• einzelnem Ausgeben des Flüssigfutterflusses an die Schichten (101a-101f) des Tanks (100) durch die Futtereinlässe hindurch und dadurch Steuern der Fütterungsdauer und des täglichen Gesamtgewichts des Futters, das ausgegeben wird.

14. Verfahren zum Kultivieren der Aquakultur in dem System nach den Ansprüchen 1 bis 13, umfassend die folgenden Schritte:
**a)** einzelnes Laden von Garnelenjungtieren in die Schichten (101a-f) des Tanks (100) hinein mit Wasser aus einem Zuchtsystem über eine Zuchtröhre und Einlassventile (401a-^{f}),
wobei der Ladeprozess ab der unteren Schicht (101a) des Tanks (100) beginnt, wobei
• die untere Schicht (101a) mit Wasser gefüllt wird, anschließend die Jungtiere hinein geladen werden und ferner
• der gleiche Schritt bis zu der oberen Schicht (101f) des Tanks (100) wiederholt wird,
**b)** Kultivieren der geladenen Garnelenaquakultur während ihres Wachstumszeitraums und Bereitstellen notwendiger Kultivierungsbedingungen zum Wachstum, wobei das Futter steuerbar in jede der Tankschichten (101a-100f) als eine flüssige Suspension von Wasser mit einem trockenen Futter eingespritzt wird,
**c)** Ernten der gewachsenen Aquakultur nach der Kultivierung, wobei
• Ernten aus den mehreren Schichten (101a-101f) in einer umgekehrten Reihenfolge von der oberen Schicht (101f) bis zu der unteren Schicht (101a), wobei
∘ das Wasser in einer beliebigen obenliegenden Schicht drainiert wird und der Ernteauslass (501a-501f) der Schicht geöffnet wird,
∘das verbleibende Wasser mit den Garnelen durch den Ernteauslass (501a-501f) hindurch gerichtet wird, wobei
∘der Garneleneinsammlungsgraben (511) ein Gefälle in Richtung des Ernteauslasses (501a-501f) aufweist und Garnelen durch den Einsammlungsgraben der Schicht und den Ernteauslass (501a-501f) hindurch mit einer stärkeren Wasserströmung nach außen gespült werden,
• nach dem Ernten die eingesammelte Ernte von Garnelen entwässert wird.

15. Verfahren nach Anspruch 14, wobei das Futter für die Aquakultur während des Garnelenaquakulturkultivierungsschritts (b) durch die folgenden Schritte bereitgestellt wird:
• Mischen des trockenen Futters mit dem Wasser aus dem RAS und dadurch Bereitstellen einer Flüssigfuttersuspension,
• Drücken der Flüssigfuttersuspension, um zu einzelnen Fütterungseinlässen jeder Schicht (101a-f) zu fließen,
• einzelnes Ausgeben des Flüssigfuttersuspensionsflusses an die Schichten (101a-f) des Tanks (100) durch die gesteuerten Futtereinlässe hindurch und gleichzeitiges Vorbeugen des Futtersuspensionsrückflusses unter Verwendung des Rückschlagventils (606) und
• Steuern der Fütterungsdauer und des täglichen Gesamtgewichts des Futters (708), das ausgegeben wird.

## Revendications

1. Système de culture de l'aquaculture de crevettes ou d'autres crustacés, comprenant
• un sous-sol (103), tel qu'une fondation en béton armé,
• un réservoir fermé en forme de cylindre (100) placé sur ledit sous-sol (103), le réservoir (100) comprenant deux ou plusieurs couches horizontales en forme de cylindre (101) pour cultiver les crustacés séparément sur les zones de chaque couche (101),
• une sortie centrale des eaux usées (201) menant à travers une sortie commune à un système d'aquaculture de recirculation RAS, ladite sortie centrale (201) comporte des parois perforées (202) à partir de chaque couche (101), permettant l'expulsion des déchets de culture des couches (101) vers la sortie commune et le RAS ;
• le système d'aquaculture de recirculation pour fournir l'eau filtrée et conditionnée dans des entrées contrôlées individuellement (202a-f) de chaque couche (101), en injectant avec un angle inférieur à 90 degrés par rapport à la paroi cylindrique du réservoir, faisant circuler l'eau dans la couche cylindrique (101) avant de la drainer ;
• des moyens d'injection d'un aliment par des vannes d'alimentation (607) et des entrées individuellement dans les multiples couches (101a-f), sous forme d'une suspension d'eau avec l'aliment,
**caractérisé en ce que** le réservoir comprend en outre
• des tubes avec des vannes d'entrée (401a-f) provenant d'un sous-système d'élevage de juvéniles de crevettes, ceux-ci disposés individuellement dans chacune des multiples couches (101a-f),
• des sorties de récolte de crevettes (501a-501f) ainsi que des agencements de fossé de fond de couches (511) pour la collecte de crevettes, agencés individuellement à chacune des multiples couches (101a-f), et
• des moyens de support du niveau d'eau à chacune des multiples couches (101a-f) du réservoir de forme cylindrique, ces couches de réservoir de connexion (101a-f) étant individuellement reliées à des récipients communicants externes correspondants (310a-f) comprenant des sorties et des vannes (320a-f), lesdits récipients communicants étant agencés pour contrôler le niveau d'eau dans le réservoir (100) au niveau d'une couche particulière sélectionnée (101a-f).

2. Système selon la revendication 1, dans lequel les fonds (107a-107f) des couches horizontales du réservoir (101a-101f) ont des pentes vers la sortie centrale des eaux usées (201), les pentes étant dans la plage de 0,5 à 5 degrés.

3. Système selon l'une quelconque des revendications 1 à 2, dans lequel le nombre de couches horizontales (101a-101f) dans le réservoir (100) est compris entre 2 et 10, et de préférence 6.

4. Système selon l'une quelconque des revendications 1 à 3, dans lequel la distance verticale minimale entre les fonds (107a-107f) des couches de réservoir (101a-101f) est de 20 cm et la distance verticale maximale entre les fonds (107a-107f) des couches de réservoir (101a-101f) est de 150 cm.

5. Système selon l'une quelconque des revendications 1 à 4, dans lequel le diamètre du réservoir (100) est compris entre 2 et 30 mètres.

6. Système selon l'une quelconque des revendications 1 à 5, dans lequel les récipients communicants (310a-f) destinés à supporter le niveau d'eau au niveau d'une couche particulière sélectionnée (101a-101f) sont intégrés dans la construction du réservoir, réduisant ainsi le nombre de tuyaux externes, et sont constitués des mêmes matériaux que la paroi du réservoir (100), et agencés pour conserver la forme cylindrique du réservoir (1).

7. Système selon l'une quelconque des revendications 1 à 6, dans lequel chaque couche (101a-f) comprend ses cloisons inférieures (107a-107f) formant le fond (107a-107f) de cette couche, dans lequel certaines cloisons sont fixes, et certaines autres cloisons sont amovibles (510) permettant ainsi de retirer des cloisons pour l'entretien du réservoir (100).

8. Système selon l'une quelconque des revendications 1 à 7, dans lequel chaque fond (107a-107f) de couche (107a-107f) comprend une cloison de récolte contrôlable (511, 512) intégrée en tant que segment mobile (510) dans le fond de la couche, dans lequel un fossé de récolte est formé avec une pente vers la sortie de récolte (501a-f) de cette couche (107a-107f), pendant la récolte de l'aquaculture de crevettes cultivées avec l'eau à travers la sortie de récolte (501a-f).

9. Système selon l'une quelconque des revendications 1 à 8, dans lequel la sortie centrale des eaux usées (201) comprend ses moyens de nettoyage (105), de préférence, une brosse rotative verticale en forme de vis (105), pour nettoyer les perforations de drainage des eaux usées (202) de chaque couche (101) et pousser l'eau avec les déchets de culture à travers la sortie commune (201) vers le RAS.

10. Système selon l'une quelconque des revendications 1 à 9, dans lequel le réservoir (100) est recouvert d'un matériau isolant thermique (102) pour réduire les pertes de chaleur et pour cultiver les crustacés dans des conditions extérieures.

11. Système selon l'une quelconque des revendications 1 à 10, comprenant une vanne de respiration (108) sur le dessus du réservoir (100), permettant à l'air d'entrer et de sortir librement du système fermé, empêchant ainsi la formation de surpression ou de vide.

12. Système selon l'une quelconque des revendications 1 à 11, comprend en outre l'un quelconque parmi
• des caméras sous-marines, pour surveiller le réservoir (100), les couches (101) et les crustacés cultivés à l'intérieur ;
• des moyens d'éclairage avec un niveau d'éclairage réglable, pour éclairer chaque couche ;
• des capteurs de température, d'oxygène, de pH et de vitesse du courant d'eau intégrés au réservoir (100), pour surveiller les conditions de culture de l'aquaculture.

13. Système selon l'une quelconque des revendications 1 à 12, dans lequel le moyen d'alimentation de l'aquaculture est un sous-système conçu pour injecter de la nourriture sous forme d'une suspension alimentaire à base d'eau obtenue en mélangeant de la nourriture sèche avec de l'eau provenant du système RAS, et l'injection de ladite suspension est contrôlable dans chacune des couches du réservoir (101a-f) par des actionneurs de vannes à commande motorisée (607a-f), ledit sous-système d'alimentation comprenant
• un récipient ou une trémie de stockage d'aliments (602) contenant des aliments secs ;
• une unité d'alimentation (603), telle qu'un distributeur, un alimentateur à vis en spirale, un alimentateur à bande ou d'autres types d'alimentateurs, pour distribuer l'aliment dans le réservoir de mélange ;
• un réservoir de mélange (604), pour mélanger les aliments secs avec de l'eau provenant d'une entrée du RAS ;
• une pompe doseuse (605), délivrant mécaniquement l'alimentation liquide mélangée aux couches (101a-101f) du réservoir (100) ;
• un clapet anti-retour (606), pour empêcher le reflux du flux d'alimentation, et
• des actionneurs de vannes à commande motorisée (607) pour contrôler les flux d'alimentation individuels dans la couche du réservoir (100),
• l'un des capteurs permettant de mesurer le niveau de nourriture et/ou le niveau d'eau (608),
• un système de contrôle (601) et/ou un système de communication (610),
dans lequel ledit sous-système d'alimentation est configuré pour
• mélanger les aliments secs avec l'eau du RAS dans le mélangeur, assurant ainsi un flux d'aliments liquides,
• distribuer le flux alimentaire liquide individuellement aux couches (101a-101f) du réservoir (100) à travers les entrées d'aliments, contrôlant ainsi la durée d'alimentation et le poids quotidien total d'aliments distribués.

14. Procédé de culture de l'aquaculture dans le système selon les revendications 1 à 13, comprenant les étapes consistant à
**a)** charger les juvéniles de crevettes individuellement dans les couches (101a-f) du réservoir (100) avec de l'eau provenant d'un système d'élevage, à travers un tube d'élevage et des vannes d'admission (401a-f),
dans lequel le processus de chargement commence à partir de la couche inférieure (101a) du réservoir (100), dans lequel
• la couche inférieure (101a) est remplie d'eau, puis les juvéniles sont chargés, et plus loin
• la même étape est répétée, jusqu'à la couche supérieure (101f) du réservoir (100),
**b)** cultiver l'aquaculture de crevettes chargées pendant sa période de croissance, en fournissant les conditions de culture nécessaires à la croissance, dans lequel la nourriture est injectée de manière contrôlée dans chacune des couches du réservoir (101a-100f) sous forme de suspension liquide d'eau avec une nourriture sèche,
**c)** récolter l'aquaculture cultivée après la culture, dans lequel
• la récolte à partir des multiples couches (101a - 101f) dans un ordre inverse de la couche supérieure (101f) à la couche inférieure (101a), dans lequel
∘ l'eau de toute couche supérieure est drainée et la sortie de collecte de la couche (501a-501f) est ouverte
∘ l'eau restante contenant les crevettes est dirigée à travers la sortie de récolte de la couche (501a-501f), dans lequel
∘ le fossé de collecte des crevettes (511) est en pente vers la sortie de récolte (501a-501f), et les crevettes sont balayées à travers le fossé de collecte de la couche et la sortie de récolte (501a-501f) avec un courant d'eau plus fort,
• après la récolte, la récolte de crevettes collectée est déshydratée.

15. Procédé selon la revendication 14, dans lequel, pendant l'étape (b) de culture de l'aquaculture de crevettes, la nourriture pour l'aquaculture est fournie par les étapes consistant à :
• mélanger les aliments secs avec l'eau du RAS, obtenant ainsi une suspension alimentaire liquide,
• pousser la suspension alimentaire liquide à s'écouler vers les entrées d'alimentation individuelles de chaque couche (101a-f),
• distribuer le flux de suspension alimentaire liquide individuellement aux couches (101a-f) du réservoir (100) à travers les entrées d'aliments contrôlées, et en même temps empêcher le reflux de la suspension alimentaire à l'aide du clapet anti-retour (606), et
• contrôler la durée d'alimentation et le poids quotidien total de l'aliment (708) distribué.
